# EUROPÄISCHE PATENTSCHRIFT

(11) **EP 1 053 142 B1**
(45) Veröffentlichungstag und Bekanntmachung des Hinweises auf die Patenterteilung: **17.04.2002**
(21) Anmeldenummer: 99904709.5
(22) Anmeldetag: 14.01.1999
(51) Int. Cl.: B60S 1/38

(54) **WISCHERBLATT**
WIPER BLADE
LAME D'ESSUIE-GLACE

(30) Priorität: 09.02.1998 DE 19805026
(43) Veröffentlichungstag der Anmeldung: 22.11.2000
(73) Patentinhaber: ROBERT BOSCH GMBH, 70442 Stuttgart (DE)
(72) Erfinder: GEILENKIRCHEN, Robert, B-4624 Fleron (BE); VERELST, Hubert, B-3300 Tienen (BE); DE CONINCK, Dirk, B-1840 Londerzeel (BE); WYNEN, Paul, B-3910 Neerpelt (BE)
(86) Internationale Anmeldenummer: DE9900060
(87) Internationale Veröffentlichungsnummer: WO9939948

(56) Entgegenhaltungen:
- DE-A- 19 615 421
- US-A- 4 138 759
- US-A- 4 622 712
- US-A- 4 638 525

## Beschreibung

### Stand der Technik

Die Erfindung betrifft ein Wischerblatt aus Gummi nach der Gattung des Hauptanspruchs.

An Wischerblattmaterialien werden komplexe Anforderungen bezüglich der mechanischen Eigenschaften als auch der Beständigkeit gegen äußere Einwirkungen gestellt: Wischerblattmaterialien müssen flexibel sein, leicht über die Windschutzscheibe gleiten und beständig sein gegenüber äußeren Einwirkungen, insbesondere gegen Oxidation (Ozonspaltung),
Mineralöl und Chemikalien, die beispielsweise im Scheibenwaschwasser enthalten sind.

Wischerblattmaterialien sind in der Regel Gummis, das heißt vulkanisierte natürliche und/oder synthetische Kautschuke (vgl. Römpp Chemie Lexikon, 9.Auflage, S.1668).

Zur Verbesserung der Gleiteigenschaften von Gummis als Wischerblattmaterialien wird beispielsweise vorgeschlagen, die Wischeroberfläche zu beschichten, zu chlorieren oder Gleitpulver wie Molybdänsulfid aufzubringen.

Der Wischergummi gemäß der DE-C-35 27 093 besteht überwiegend aus EPDM, das heißt aus Ethylen-Propylen-Dien-Terpolymeren. Bei EPDM liegen die ungesättigten Stellen außerhalb der Polymerhauptkette, EPDM ist daher nicht halogenierbar. Zudem ist EPDM nicht resistent gegenüber Mineralöl und Chemikalien aus dem Scheibenwaschwasser. Um die Gleiteigenschaften und die Beständigkeit des überwiegend aus EPDM bestehenden Wischerblattes zu verbessern, werden daher gemäß der DE-C-35 27 093 auf eine Matrix aus EPDM mindestens in den Bereichen, die beim bestimmungsgemäßen Gebrauch auf der Oberfläche der Windschutzscheibe gleiten, Abschnitte aus chloriertem Dien-Typ-Gummi aufgebracht. Das Wischerblatt hat den Nachteil eines relativ komplizierten Aufbaus aus Schichten unterschiedlicher Gummimaterialien.

### Vorteile der Erfindung

Das Wischerblatt mit den Merkmalen des Hauptanspruchs hat demgegenüber den Vorteil, mit einem einfachen Aufbau eine gute Wischqualität zu erreichen.

Der Kopfteil aus einem Dien-Typ-Gummi ist halogenierbar, wodurch gute Gleiteigenschaften und Leichtgängigkeit in den Bereichen, in denen das Wischerblatt mit den Bügelkrallen und der Federschiene des metallischen Halters
zusammenwirkt, erreicht werden, sowie auch eine härtere Oberfläche.

Für den Umlegesteg sowie den Keil des Wischerblattes wird erfindungsgemäß Chloroprengummi, der im folgenden mit der international üblichen Abkürzung CR bezeicnnet wird, verwendet. Dadurch wird in einfacher und preiswerter Weise eine gute Wischerqualität erreicht.

CR verbindet gute mechanische Eigenschaften mit hoher Beständigkeit gegen Witterungs-, Alterungs-, Chemikalien- und Temperatureinflüsse.
Mechanische Eigenschaften von CR, die für die Anwendung als Wischerblattmaterial wichtig sind, sind gute elastische Eigenschaften, geringster Druckverformungsrest (lowest compression set) im Temperaturbereich von -10°C bis 120°C, d.h. in dem für die Verwendung als Wischerblatt relevanten Temperaturbereich, sowie sehr gute Abriebfestigkeit, die sonst nur von teuren synthetischen Spezialgummi-Arten erreicht wird.

Zu den guten mechanischen Eigenschaften kommt eine hohe Beständigkeit gegen äußere Einflüsse:
hohe Wetterbeständigkeit und Beständigkeit gegen Ozonspaltung, die durch den Zusatz von Antioxidantien und Ozoninhibitoren, anders als bei anderen Gummi-Arten, noch wesentlich verbessert werden kann, geringe Quellung und hohe Beständigkeit gegenüber Chemikalien, die beispielsweise im Scheibenwaschwasser enthalten sind, wesentlich höhere Beständigkeit gegenüber Mineralöl im Vergleich zu Vulkanisaten auf der Basis von Naturkautschuk sowie hervorragende Temperaturbeständigkeit, die jene üblicher vulkanisierter Kautschuke auf der Basis von beispielsweise Naturkautschuk, Butadien-Kautschuk oder Styrol-Butadien-Kautschuk übertrifft. Die Langzeittemperaturbeständigkeit von CR liegt bei ca.80°C.

CR weist somit eine Kombination von Eigenschaften auf, die für den Einsatz als Wischerblattmaterial wichtig sind, bei einem wesentlich günstigeren Preis im Vergleich zu Spezialkautschuk-Arten.

Die Unteransprüche enthalten Weiterbildungen und Verbesserungen des im Hauptanspruch angegebenen Wischerblatts.

In vorteilhafter Weise ist der Bereich des Kopfteils (1), der an den Umlegesteg (2) angrenzt, aus demselben Gummimaterial wie der Keil (3) und der Umlegesteg (2), d.h. aus CR hergestellt. Dadurch wird eine bessere Verankerung der aus CR bestehenden Teile - Umlegesteg (2) und Keil (3) - in dem im wesentlichen aus einem Gummi vom Dien - Typ bestehenden Kopfteil (1) erreicht.

Der Dien - Gummi des Kopfteils (1) ist in vorteilhafter Weise halogeniert, bevorzugt chloriert. Dadurch wird die Oberflächenhärte verbessert sowie die Gleitfähigkeit gegenüber den metallischen Halterelementen, wie Krallenbügel und Federschiene.

Das Gummimaterial für den Kopfteil (1) ist im wesentlichen ein Dien - Gummi, wobei bevorzugt preiswerte, handelsübliche Gummi - Arten, beispielsweise Naturgummi und/oder Butadien - Gummi und/oder Styrol - Butadien - Gummi eingesetzt werden.

### Ausführungsbeispiele und Zeichnung

Die Erfindung wird im folgenden anhand von zwei Ausführungsbeispielen, die in der nachfolgenden Zeichnung dargestellt sind, näher erläutert.

Es zeigen im einzelnen:
Figur 1 einen Querschnitt durch ein erfindungsgemäßes Wischerblatt mit innenliegender Federschiene und
Figur 2 einen Querschnitt durch ein erfindungsgemäßes Wischerblatt mit außenliegender Federschiene.

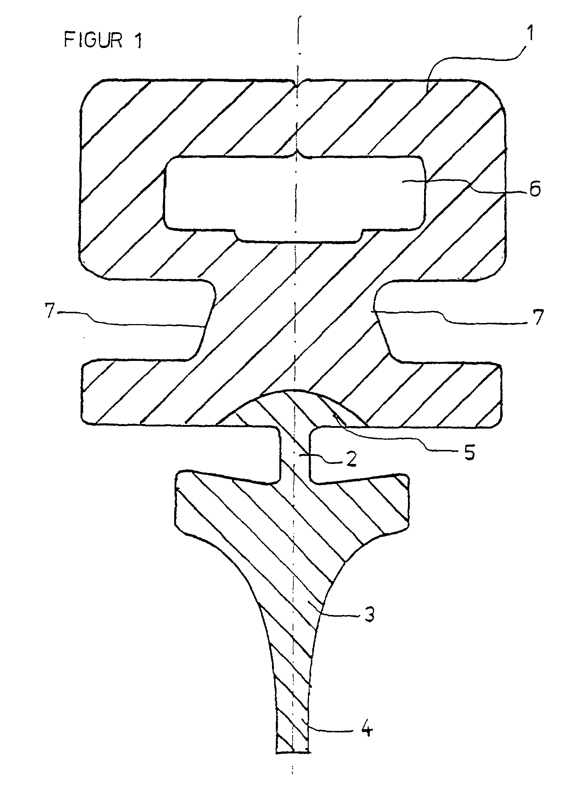

Das Wischerblatt nach dem ersten Ausführungsbeispiel (Figur 1) hat die übliche, im wesentlichen streifenförmige Ausgestaltung. Der in Figur 1 dargestellte Querschnitt zeigt einen breiteren Kopfteil 1, der über einen Umlegesteg 2 mit einem Keil 3 verbunden ist. Der Kopfteil 1 weist eine innenliegende kanalförmige Aussparung 6 für die Aufnahme der nicht dargestellten Federschiene sowie seitliche Aussparungen 7 für die Aufnahme der nicht dargestellten Krallen der metallischen Haltebügel auf. Der Kopfteil 1 ist über einen schmalen Umlegesteg 2 mit dem Keil 3 verbunden, der sich an seinem dem Kopfteil gegenüberliegenden Ende zu einer schmalen Wischlippe 4 verjüngt. Der Kopfteil 1 ist im wesentlichen aus einem Dien - Typ - Gummi ausgebildet, Umlegesteg 2 und Keil 3 aus Chloroprengummi (CR). Zur besseren Verankerung des Umlegestegs 2 im Kopfteil 1 ist auch der dem Umlegesteg 2 benachbarte Bereich des Kopfteils 1 aus CR ausgebildet.

Das erfindungsgemäße Wischerblatt wird vorzugsweise durch Coextrusion von Dien - Kautschuk und Chloroprenkautschuk hergestellt, wobei zunächst ein unvulkanisierter Streifen mit vorgegebener Querschnittsform entsteht. Das Wischerblatt wird anschließend vulkanisiert und gegebenenfalls chloriert, beispielsweise durch Behandlung mit Hypochlorit oder Trichlorisocyanursäure.

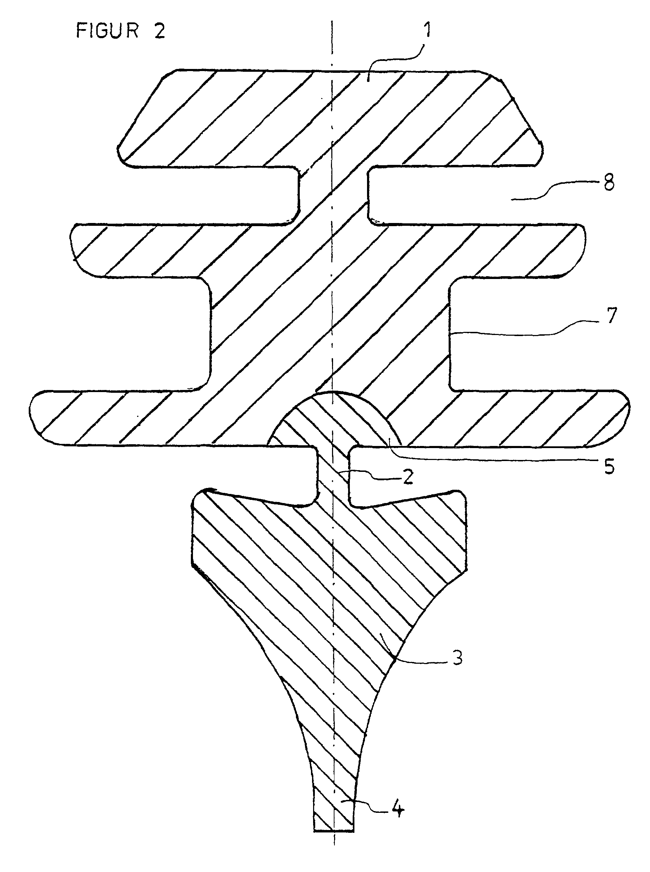

Das Wischerblatt nach dem zweiten Ausführungsbeispiel (Figur 2) ist für die Aufnahme außenliegender Federschienen ausgebildet. Es weist im Bereich des Kopfteils 1 anstelle des Kanals 6 aus dem ersten Ausführungsbeispiel außenliegende Aussparungen 8 für die Aufnahme der nicht dargestellten Federschiene auf.-

## Patentansprüche

1. Wischerblatt aus Gummi mit einem Kopfteil, einem Umlegesteg und einem Keil, **dadurch gekennzeichnet, daß** der Kopfteil (1) im wesentlichen aus einem Gummi vom Dien-Typ und der Umlegesteg (2) sowie der Keil (3) im wesentlichen aus Chloroprengummi (CR) hergestellt ist.

2. Wischerblatt aus Gummi mit einem Kopfteil, einem Umlegesteg und einem Keil, **dadurch gekennzeichnet, daß** der Keil (3) aus Chloropren besteht.

3. Wischerblatt nach Anspruch 1 oder 2, **dadurch gekennzeichnet, daß** der Kopfteil (1) im Bereich, der an den Umlegesteg (2) angrenzt, aus CR hergestellt ist.

4. Wischerblatt nach einem der Ansprüche 1 bis 3, **dadurch gekennzeichnet, daß** der Gummi vom Dien-Typ halogeniert, insbesondere chloriert ist.

5. Wischerblatt nach einem der vorhergehenden Ansprüche, **dadurch gekennzeichnet, daß** der Gummi vom Dien-Typ Naturgummi und/oder Butadien-Gummi und/oder Styrol-Butadien-Gummi ist.

## Claims

1. Wiper blade made from rubber with a stock, a flip-over web and a wedge-shaped section, **characterized in that** the stock (1) essentially consists of a diene-type rubber and the flip-over web (2), and also the wedge-shaped section (3), has been produced essentially from chloroprene rubber (CR).

2. Wiper blade made from rubber with a stock, a flip-over web and a wedge-shaped section, **characterized in that** the wedge-shaped section (3) is composed of chloroprene.

3. Wiper blade according to Claim 1 or 2, **characterized in that** the stock (1) has been produced from CR in the region adjoining the flip-over web (2).

4. Wiper blade according to any of Claims 1 to 3, **characterized in that** the diene-type rubber has been halogenated, in particular chlorinated.

5. Wiper blade according to any of the preceding claims, **characterized in that** the diene-type rubber is natural rubber and/or butadiene rubber and/or styrene-butadiene rubber.

## Revendications

1. Lame d'essuie-glace en caoutchouc avec une partie de tête, une articulation et une lèvre d'essuyage,
**caractérisée en ce que**
la partie de tête (1) est principalement en un caoutchouc de type diène et l'articulation (2) ainsi que la lèvre d'essuyage (3) sont principalement en caoutchouc chloroprène (CR).

2. Lame d'essuie-glace en caoutchouc avec une partie de tête, une articulation et une lèvre d'essuyage,
**caractérisée en ce que**
la lèvre d'essuyage (3) est en chloroprène.

3. Lame d'essuie-glace selon l'une quelconque des revendications 1 ou 2,
**caractérisée en ce que**
la partie de tête (1) est réalisée en caoutchouc (CR) dans la zone adjacente à l'articulation (2).

4. Lame d'essuie-glace selon l'une quelconque des revendications 1 à 3,
**caractérisée en ce que**
le caoutchouc de type diène est halogéné, notamment chloré.

5. Lame d'essuie-glace selon l'une quelconque des revendications précédentes,
**caractérisée en ce que**
le caoutchouc de type diène est du caoutchouc naturel et/ou du caoutchouc butadiène et/ou du caoutchouc butadiène-styrène.
